# EUROPEAN PATENT APPLICATION

(11) **EP 2 100 545 A1**
(43) Date of publication of application: **16.09.2009**
(21) Application number: 09153577.3
(22) Date of filing: 25.02.2009
(51) Int. Cl.: A47J 47/14, A47G 19/26

(54) **Containment group for food substances**

(30) Priority: 14.03.2008 IT MI20080437
(71) Applicant: Piacenza, Raffaele, 26854 Cornegliano Laudense (Lodi) (IT); Piacenza, Marco Alessandro, 26854 Cornegliano Laudense (Lodi) (IT)
(72) Inventor: Piacenza, Raffaele, 26854 Cornegliano Laudense (Lodi) (IT); Piacenza, Marco Alessandro, 26854 Cornegliano Laudense (Lodi) (IT)
(74) Representative: Martegani, Franco

(57) **Abstract**

A containment group for food substances comprises a base group (11) and a top cover group (12) which can be movably coupled with respect to each other between at least two lowered and raised terminal positions, there also being blocking means of said groups (11, 12) in said two terminal positions.

## Description

The present invention relates to a containment group for food substances, particularly but not exclusively for cakes and other sweets.

The invention is described hereunder, for purely illustrative and non-limiting purposes, with reference to a cake holder, but the same can be used for the containment and preservation of other food substances.

There are currently many different types of known cake-holder groups which, although different in form and/or geometry, all exert the same function, i.e. providing a valid support for the safe transportation, for example but not exclusively, of a cake.

All currently known cake holders comprise a rest base on which the cake rests, and a top, also equipped with a side containment wall if the base lacks this, which can be selectively coupled/uncoupled from the relative base to give access, when desired, to the internal volume of the cake holder.

In this way, i.e. by removing the top, it is therefore possible for a user to place a cake inside the cake-holder and subsequently remove it when desired.

Although these known cake-holders efficiently exert the above function and also have firm blocking and coupling means of the top with respect to the relative base, they have the disadvantage of having an internal volume, i.e. a volume which can be used by the user for transporting cakes, which is constant and cannot be modified according to the requirements.

This aspect is particularly disadvantageous in the sense that with a particular known cake-holder it is only possible to safely transport only a relative type of cake making it necessary to purchase other cake-holders having different dimensions for safely transporting cakes having different sizes.

A general objective of the present invention is to solve the drawbacks of the known art mentioned above in an extremely simple, economical and particularly functional manner.

A further objective is to provide a perfected cake-holder group, not of the disposable type, in which the internal volume can be modified as desired thus providing a single support for the safe transportation of variously sized cakes.

Another objective is to provide a perfected cake-holder group, not of the disposable type, in which the top can always be firmly attached to the relative base regardless of the internal volume modified as desired for the transportation of cakes having various sizes.

In view of the above objectives, according to the present invention, a containment group of food substances, for example a perfected cake holder group, has been conceived, having the characteristics specified in the enclosed claims.

The structural and functional characteristics of the present invention and its advantages with respect to the known art will appear even more evident from the following description, referring to the enclosed drawings, which show (for purely illustrative and non-limiting purposes) a perfected cake holder group according to the innovative principles of the invention itself.

In the drawings:
- figure 1 shows a perspective view of a perfected cake holder according to the present invention;
- figure 2 shows a perspective view of the perfected cake holder of figure 1, in a different phase of use;
- figure 3 shows an enlarged detail of the perfected cake holder of figure 1 in an intermediate phase between those of figures 1 and 2;
- figures 4a and 4b respectively show a perspective and raised side view of an element of a perfected cake holder according to the present invention;
- figures 5a, 5b and 5c show perspective views of other elements of the perfected cake holder according to the present invention;
- figures 6a-6e show some of the functioning phases of the perfected cake holder according to the present invention.

With reference to the drawings, a perfected cake holder according to the present invention is indicated as a whole with 10.

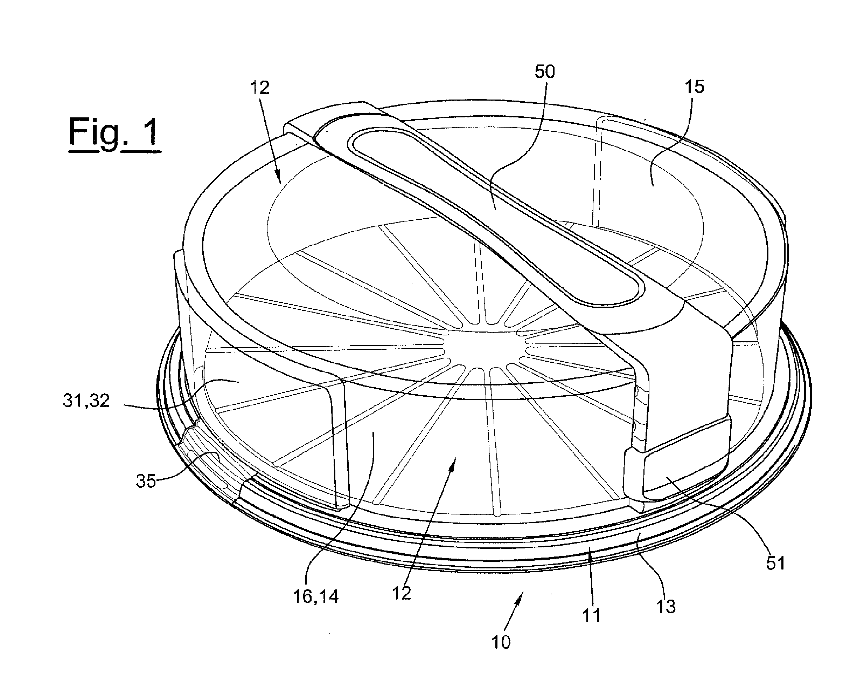

Said perfected cake holder 10, shown in a first embodiment in figure 1, is equipped with a base group 11 which comprises a lower rest base 13 and a first side containment wall 14 which develops upwards on one side of the base 13 along a peripheral portion of the same 13.

The same cake holder group 10 shown in figure 1 also comprises a top cover group 12 comprising an upper top 15 and a second side containment wall 16 which develops downwards on one side of the top 15 also along a peripheral portion of the top itself 15.

In particular, during the use of the cake holder group 10, the second side containment wall 16 of the top cover group 12 is coupled externally to the above first side containment wall 14.

According to the invention, the top cover group 12 can be coupled/decoupled from the base group 11 as desired by vertical sliding of the cover group 12. In short, it is a so-called telescopic coupling.

Furthermore, according to the invention, when the top cover group 12 is coupled with the base group 11, the same 12 is vertically movable with respect to the base group 11 at least between a first lowered position and a second raised position, with the possibility of positioning in intermediate positions between said lowered and raised positions.

The above first "lowered position" is schematically shown in figure 1 where it can be noted that the second side containment wall 16 of the top cover group 12 substantially covers the whole of the first side containment wall 14 of the base group 11.

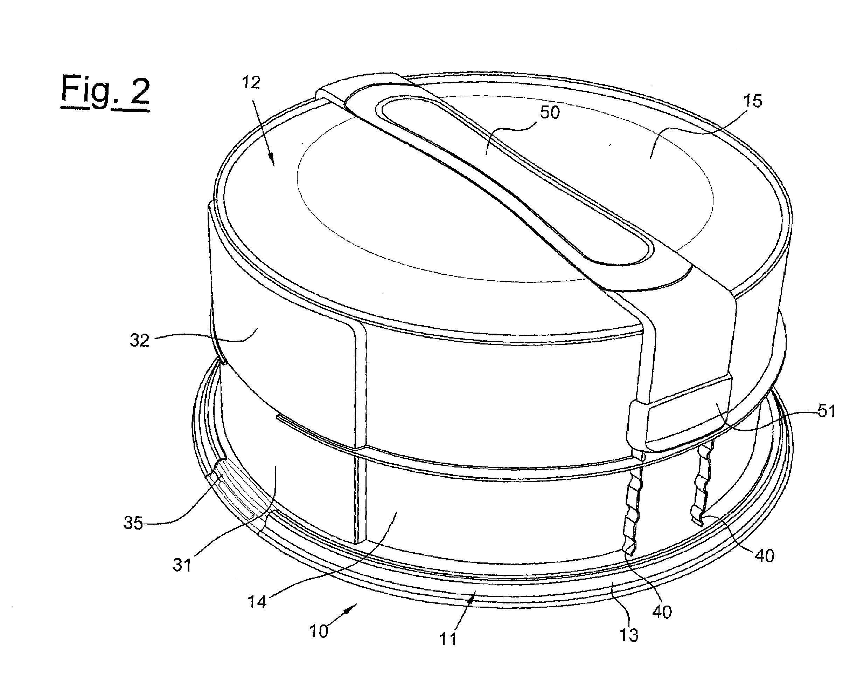

The second "raised position", indicated above, is schematically shown in figure 2 where the second side containment wall 16 of the top cover group 12 is substantially completely above, or in a raised position, with respect to the first side containment wall 14 of the base group 11.

It is evident that in said second "raised position" of figure 2, the internal volume in the cake holder 10 available is considerably increased with respect to the internal volume provided by the same cake holder 10 in the configuration of figure 1.

In order to guarantee that these positions described above are kept firmly stable, i.e. that the top cover group 12 does not become detached, when not desired, from the relative base group 11 either in the raised or lowered position, the invention also envisages the presence of blocking means of the cake holder 10 in the above first and second position, visible in figures 1 and 2, and also preferably in at least another intermediate position: i.e. there can also be a series of intermediate positions between the terminal lowered and raised position.

It is therefore evident that the cake holder group 10 according to the present invention, offers the user a support, in particular for transporting a cake, capable of always adapting itself to the volume of the cake itself.

In other words, with the cake holder group 10 it is possible to transport any type of cake regardless of the relative dimensions of the cake itself without requiring any expense but only simple manual operations.

According to different embodiment examples, the base group 11 can be produced in a single piece or, alternatively, the lower rest base 13 and the first side containment wall 14 can be separate bodies which can be constrained and unconstrained as desired.

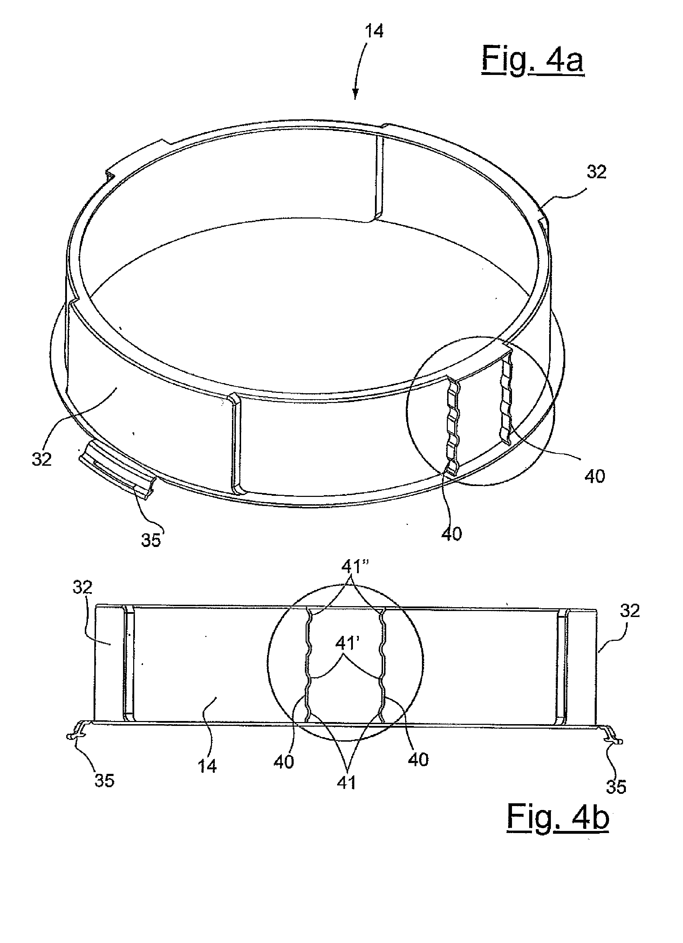

In the latter case, the first side containment wall 14 comprises shaped peripheral portions 35, shown for example in figures 4a and 4b, suitable for being coupled with relative shaped portions of the base 13 to form a firm coupling.

As indicated above, the top cover group 12, when coupled with the relative base group 11, can have different relative positions by means of vertical sliding in which said second side containment wall 16 slides up the first side containment wall 14.

In order to guarantee and guide this movement, the cake holder group 10 according to the invention comprises centering and guide means 31, 32 of the vertical sliding of the second side containment wall 16 with respect to the first side containment wall 14.

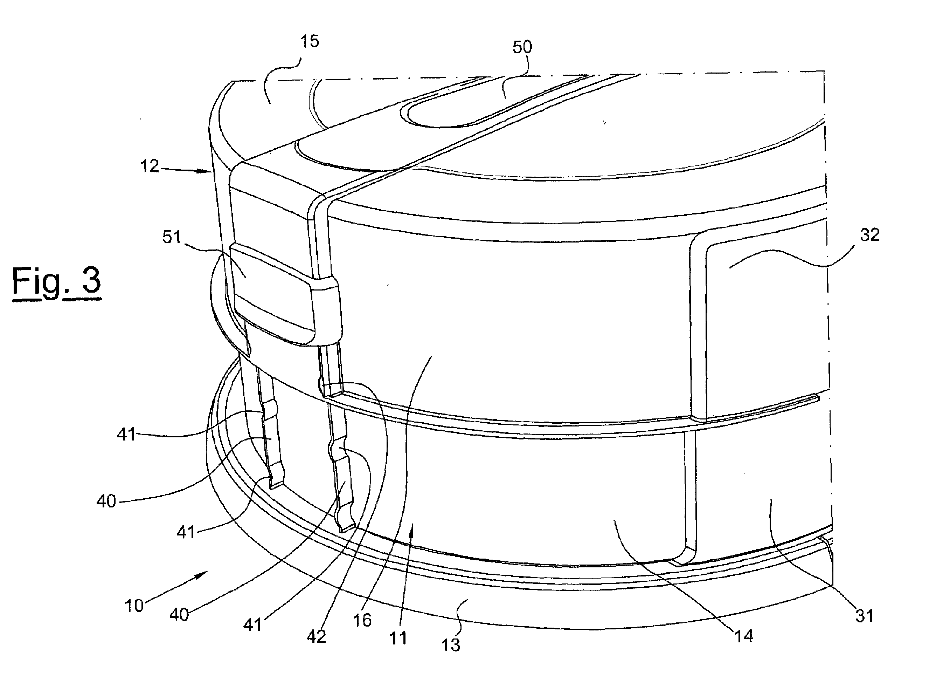

According to an embodiment shown in the figures, for example in figure 3, said guiding means 31, 32 of the vertical sliding of the second side containment wall 16 with respect to the first side containment wall 14 comprise at least one protruding portion 31, situated externally with respect to the first side containment wall 14, which can be coupled with an internal cavity 32 having corresponding dimensions and situated inside the second side containment wall 16.

The at least one protruding portion 31 therefore acts as a rail for the sliding of the internal cavity 32, guiding the movement of the top cover group 12 with respect to the base group 11.

As mentioned above, the cake holder group 10 comprises, according to the invention, blocking means of the cake 10 itself in the first and second position described and preferably in at least another intermediate position.

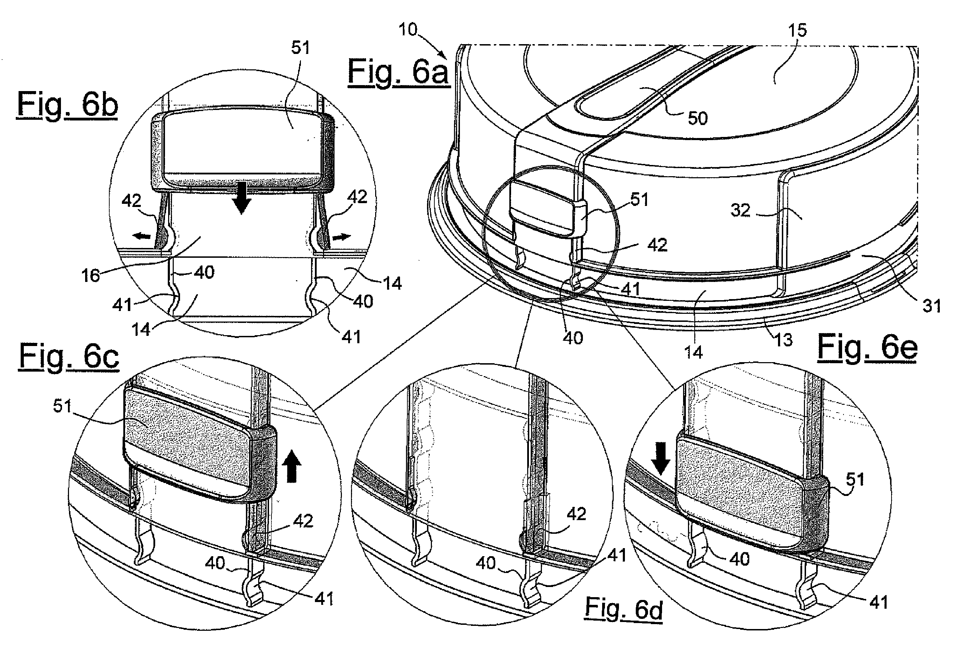

According to a preferred embodiment, shown in figures 6a-6c, said blocking means comprise couplings of the clip-insert type, selectively hand removable by a user, between the top cover group 12 and the base group 11 in the different possible positions of the top cover itself 12.

Said couplings of the clip-insert type are produced by at least two thin profiles 40 with a vertical development situated along the first side containment wall 14 of the base group 11, said profiles 40 are provided, in facing positions, with cavities 41, 41' 41" vertically distanced between each other.

Said thin profiles 40 are also schematically shown in figures 4a and 4b.

In order to block the top cover group 12 on the base group 11 in its different possible positions, there is also the presence of at least two cursor elements 42, shown in figures 6a-6c, which are elastically yielding, positioned in front of each other and having a lower shaped protruding portion complementary to the cavities 41, 41' 41".

In particular, said at least two cursor elements 42 are associated with the top cover group 12 in a position in which, when it 12 is coupled with the base group 11, they are laterally in correspondence with the two thin profiles 40.

During the vertical translation of the top cover group 12 with respect to the base group 11, the two cursor elements 42, if not externally constrained, are conformed to yield elastically so as to be freely coupled and decoupled with the cavities 41, 41' 41" vertically distanced, of the profiles 40 as shown in figure 6b.

In order to block said cursor elements 42 with respect to a preselected pair of cavities 41, 41' 41" , and therefore to block the top cover group 12 in a preselected position with respect to the base group 11, the blocking means also comprise a sleeve 51 associated with the at least two cursor elements 42, said sleeve 51 is movable between a first lowered position, visible in figure 6e, in which it blocks and forces the at least two cursor elements 42 in correspondence with a pair of cavities 41, 41' 41", and a second raised position, visible in figure 6c, in which it does not act against the at least two cursor elements 42 allowing the latter to be elastically deformed, as shown in figure 6b, to "leave" the cavities 41, 41' 41" and consequently allow the top cover group 12 to slide with respect to the base group 11, when hand moved.

In other words, when the user manually positions the sleeve 51 in a raised position, the top cover group 12 can be moved with respect to the base group 11 thanks to the fact that two cursor elements 42, which are free, yield elastically and slide along the profiles 40 not being withheld in the cavities 41, 41' 41" which they encounter during their advancement.

Once the two cursor elements 42 have reached a particular pair of cavities 41, 41' 41", which corresponds to a certain span of the top cover group 12 with respect to the base group 11 and therefore to a particular desired internal volume of the cake holder 10, by acting manually on the sleeve 51, it is sufficient to lower it until it is superimposed with two cursor elements 42 to firmly constrain them in the relative cavities 41, 41' 41" where they are housed.

When this position has been reached, the sleeve 51 inhibits the deformation of the two cursor elements 42 and constrains them inside the relative cavities 41, 41' 41" making it impossible to act manually on the top cover group 12 to allow it to slide with respect to the base group 11.

In other words, once the sleeve 51 has been lowered, the top cover group 12 becomes fixed with respect to the base group 11, thus forming a certain, and desired volume, inside the cake holder 10.

As already mentioned, the at least two elastically yielding cursor elements 42 are associated with the top cover group 12.

Different types of blocking elements acting between the base and the top can naturally also be envisaged.

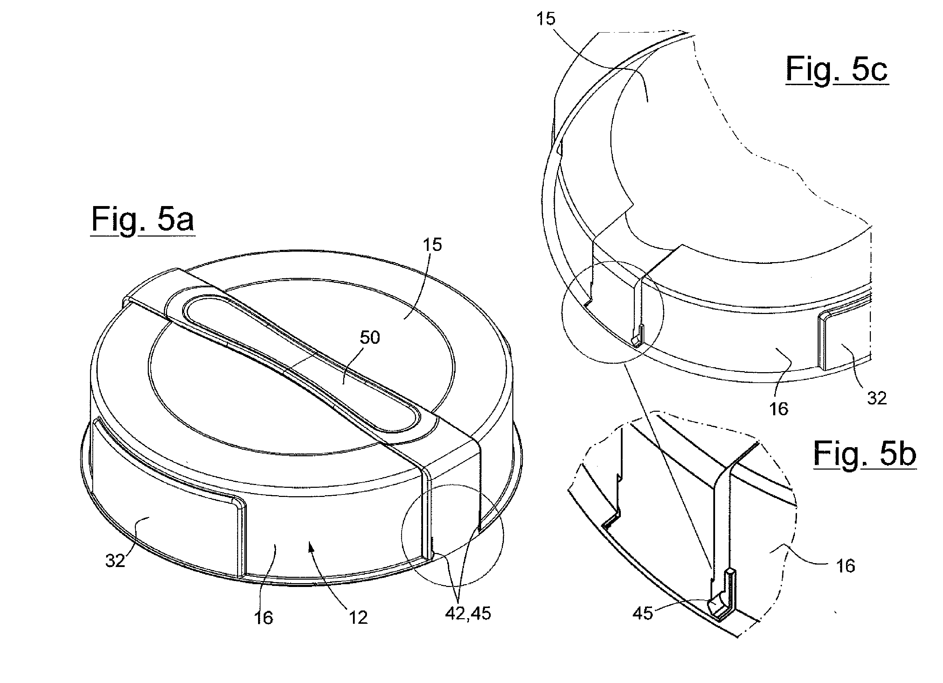

According to a preferred example shown in figures 5a-5c, the top cover group 12 comprises a sleeve element 50 which occupies an upper diametric portion of the cover 15 and extends, from opposite and symmetrical parts, as far as the lower ends of the second side containment wall 16.

As can be seen in this embodiment, the at least two cursor elements 42 are not directly associated with the second side containment wall 16 but are, preferably but not necessarily, connected to the terminal portions of the above sleeve element 50.

As the sleeve element 50 is integral with the other elements of the top cover group 12, however, the functioning of the at least two cursor elements 42 is the same as that described above with the only difference that they 42 do not act directly in the cavities 41, 41' 41" but by means of a complementarily shaped cavity 45 situated in a lower portion of the second side containment wall 16.

Said embodiment is schematically shown in figures 5b and 5a which respectively show the cover 15 without and with the sleeve element 50.

From what is described above with reference to the figures, it is evident that a perfected cake holder group according to the invention is particularly useful and advantageous.

In particular, the cake holder, object of the present invention allows the internal volume of the cake holder itself to be modified so as to form a single support for various formats of cakes, always maintaining a firm coupling between the top cover group and the base group.

For this purpose, there can also be a screw coupling, which is at the same time stable and allows the base group and top cover group to be reciprocally moved away from and towards each other.

In addition, between the base group and the top cover group, there can also be intermediate elements, such as rings, which allow the height to be increased, and therefore the volume, of the containment group.

The objective indicated in the preamble of the description has therefore been achieved.

The forms of the perfected cake holder according to the invention, as also the materials, can naturally differ from that shown for purely illustrative and non-limiting purposes in the drawings.

The protection scope of the invention is therefore delimited by the enclosed claims.

## Claims

1. A containment group for food substances, **characterized in that** it comprises a base group (11) and a top cover group (12) which can be movably coupled with respect to each other between at least two lowered and raised terminal positions, there also being blocking means of said groups (11, 12) in said two terminal positions.

2. The containment group (10) for food substances according to claim 1, provided with a base group (11), comprising a lower rest base (13) and a first side containment wall (14) which develops upwards on one side of said base (13) along a peripheral portion of the same (13), and a top cover group (12) which can be selectively coupled with said base group (11) comprising an upper top (15) and a second side containment wall (16) which develops downwards from one side of said top (12) which can be associated with said first side containment wall (14), wherein said top cover group (12) can also be moved vertically with respect to said base group (11) between a first lowered position and a second raised position, there also being blocking means of said cake holder (10) in said first and second position.

3. The group (10) according to claim 2, **characterized in that** in said first lowered position, said second side containment wall (16) substantially covers the whole of said first side containment wall (14), and in said second raised position, said second side containment wall (16) is substantially entirely above said first side containment wall (14).

4. The group (10) according to claim 2, **characterized in that** said base (13) and top cover (12) groups move telescopically with respect to each other.

5. The group (10) according to claim 2, **characterized in that** said blocking means comprise blocking means of said cake holder (10) in at least a further intermediate position between said first and second position.

6. The group (10) according to claim 2 or 5, **characterized in that** said lower rest base (13) and said first side containment wall (14) can be unconstrained from each other as desired.

7. The group (10) according to claim 2, **characterized in that** it comprises centering and guiding means (31, 32) of the vertical sliding of said top cover group (12) with respect to said base group (11).

8. The group (10) according to claim 7, **characterized in that** said guiding means (31, 32) of the vertical sliding of said top cover group (12) with respect to said base group (11) comprise a protruding portion (31) of said first side containment wall (14) coupled with an internal cavity (32) of said second side containment wall (16).

9. The group (10) according to claim 2 or 5, **characterized in that** said blocking means of said top cover group (12) with respect to said base group (11) comprise couplings of the clip-insert type.

10. The group (10) according to claim 9, **characterized in that** said clip-insert blocking means comprise at least two facing thin profiles (40) with a vertical development situated externally along said first side containment wall (14), said at least two thin profiles (40) being provided, in facing positions, with cavities (41, 41', 41") vertically distanced, said clip-insert blocking means also comprising at least two cursor elements (42) elastically yielding, situated in front of each other and having a shaped protruding portion complementary to said cavities (41, 41', 41"), said at least two cursor elements (42) being associated with said two thin profiles (40), having at least one sleeve (51) externally associated with said at least two cursor elements (42) which can be moved between a first lowered position, blocking said at least two cursor elements (42) in correspondence with a pair of said cavities (41, 41', 41"), and a second raised position in which said at least two cursor elements (42) are free to run, becoming deformed, along said at least two thin profiles (40).

11. The group (10) according to claim 10, **characterized in that** said at least two cursor elements (42) are associated with at least one terminal portion of a sleeve element (50) associated above with a diametric portion of said cover (15) and which extends from opposite parts as far as the lower ends of said second side containment wall (16).

12. The group (10) according to claim 2, **characterized in that** it is destined for containing sweets.

13. The group (10) according to claim 2, **characterized in that** it is destined for containing cakes.
